# EUROPÄISCHE PATENTSCHRIFT

(11) **EP 1 598 133 B1**
(45) Veröffentlichungstag und Bekanntmachung des Hinweises auf die Patenterteilung: **15.06.2011**
(21) Anmeldenummer: 04102199.9
(22) Anmeldetag: 18.05.2004
(51) Int. Cl.: B23B 31/113, E21B 17/046

(54) **Kupplung für Bohrgerät und Verwendung einer solchen Kupplung**
Coupling for drilling apparatus and use of the same
Accouplement pour appareil de forage et son utilisation

(43) Veröffentlichungstag der Anmeldung: 23.11.2005
(73) Patentinhaber: TMT - Tapping Measuring Technology Sarl., L-1122 Luxemburg (LU)
(72) Erfinder: CLESEN, Romain, 8528, Colpach-Haut (LU); MALIVOIR, Philippe, 54680, Errouville (FR); KLAAS, Wolfgang, 1243, Luxembourg (LU)
(74) Vertreter: Office Freylinger

(56) Entgegenhaltungen:
- DE-A- 3 913 626
- DE-A- 10 009 244
- DE-C- 326 473
- PL-B- 186 277
- US-A- 1 766 136
- US-A- 1 824 509
- US-A- 2 219 907
- US-A- 4 361 196
- US-A- 4 850 762
- US-A1- 2003 141 674

## Beschreibung

### Einleitung

Die vorliegende Erfindung betrifft eine Bajonett-Kupplung gemäß dem Oberbegriff des Anspruchs 1 zum lösbaren Verbinden eines Bohrwerkzeugs mit der Antriebswelle einer Bohrmaschine, insbesondere einer Dreh-Schlagbohrmaschine.

Eine solche Bajonett-Kupplung ist aus der Abbildung 6 der US 2,219,907 bekannt. Die Erfindung betrifft ebenfalls die Verwendung einer solchen Bajonett-Kupplung.

In verschiedenen Bereichen der Industrie und des Baugewerbes ist für die Verwendung von Bohrgerät eine momentstarre, einfach herzustellende und einfach zu lösende Verbindung, d.h. Kupplung zwischen Bohrmaschine und Bohrwerkzeug erforderlich. Dies gilt insbesondere bei widrigen Arbeitsbedingungen für das Bedienpersonal, wie beispielsweise im Bergbau oder aber beim Stichlochbohren im Hochofenbereich. Die Verwendung von schwerem Gerät, welche in diesen Bereichen üblich ist, hemmt ebenfalls die einfache Bedienbarkeit. Nebst der Forderung nach unkompliziert und rasch zu bedienenden Kupplungen, bestehen wegen sehr hohen zu übertragenden Drehmomenten auch hohe Forderungen an die Belastbarkeit der Kupplung. Diese beiden Forderungen resultieren in teilweise gegensätzlichen Ansprüchen an solche Kupplungen.

Verschiedene Ausführungen solcher Kupplungen sind aus dem Stand der Technik bekannt. In einer weit verbreiteten Ausführung wird die lösbare Kupplung durch Gewindeverschraubung erzielt. Diese Art von Kupplung ist zwar wegen Dichtheit bei kühl- bzw. spülmittelführenden Bohrgestängen vorteilhaft, erfordert aber allgemein die Verwendung von Werkzeug und bringt den Nachteil einer oft schweren Lösbarkeit mit sich. Letzteres Problem wird insbesondere durch das Risiko eines Kaltverschweißens der Gewindeverbindung verschärft, welches bei sehr hohen Drehmomenten auftreten kann. Eine andere Art von Kupplung wird durch die Verwendung eines Querkeils, welcher mit einer Quernut beispielsweise im Bohrgestänge zusammenwirkt, erzielt. Diese Anordnung ist im allgemeinen leicht lösbar, es kann jedoch ein Festfressen zwischen Querkeil und Quernut auftreten. Weitere Nachteile sind die Materialschwächung durch die Quernut und die Gefahr welcher ein sich lösender Querkeil darstellt. Weiterhin sind verschiedene Arten von Bajonett-Kupplungen bekannt, welche einige Vorteile gegenüber oben genannten Ausführungen besitzen. Die Mehrzahl dieser Bajonettkupplungen bringt jedoch den Nachteil mit sich, dass aufgrund der verwendeten Geometrie der Kupplungselemente ein Verkanten auftreten kann. Daher ist die Bedienung solcher Kupplungen oft schwierig, da sie ein genaues Vorgehen beim Einführen bzw. Lösen erfordert, welche insbesondere bei schwerem Gerät nicht in einfacher Weise vom Bedienpersonal geleistet werden kann. Auch kann bei solchen Kupplungen, welche eine sehr hohe Anforderung an die Fertigungstoleranzen stellen, ein Einfressen bzw. Einklemmen von männlichem und weiblichen Kupplungsteil auftreten. Eine weitere Schwäche bekannter Kupplungssysteme liegt im benötigten Zeitaufwand zur Betätigung. Einige dieser Bajonettkupplungssysteme benötigen beispielsweise eine manuell zu betätigende, zusätzliche Verriegelung. Darüber hinaus kommt es bei diesen Systemen häufig zu Material- und Verbindungsversagen bei dauerhafter Belastung durch Schlagbohren oder durch sehr hohe Drehmomente.

### Aufgabe der Erfindung

Aufgabe der vorliegenden Erfindung ist es folglich, eine Kupplung für Bohrgerät vorzuschlagen, welche die oben erwähnten Nachteile beseitigt.

### Allgemeine Beschreibung der Erfindung

Diese Aufgabe wird erfindungsgemäß gelöst durch eine Bajonett-Kupplung gemäss Anspruch 1.

Eine solche Bajonett-Kupplung zur Drehmomentübertragung einer Bohrmaschine auf ein Bohrwerkzeug, umfasst eine Kupplungsmuffe mit Kupplungskammer und einer Zugangsöffnung die axial in die Kupplungskammer einmündet sowie einen Kupplungskopf mit mindestens einem Kupplungsnocken, wobei der Kupplungskopf in einer ersten Winkelstellung bezüglich der Kupplungskammer durch die Zugangsöffnung axial in die Kupplungskammer einführbar ist, und wobei der Kupplungskopf in einer zweiten Winkelstellung mittels seinem mindestens einen Kupplungsnocken zur Drehmomentübertragung in der Kupplungskammer anliegt. Erfindungsgemäß sind Kupplungskopf und Kupplungskammer derart ausgestaltet, dass in der ersten Winkelstellung, das radiale Spiel des Kupplungskopfs in der Kupplungskammer im Bereich des Kupplungsnockens wesentlich größer ist als in der zweiten Winkelstellung. Durch diesen radialen Abstand wird Zusammenführen bzw. Auseinanderziehen sowie Kuppeln und Entkuppeln der Kupplungsteile vereinfacht, da fertigungsbedingte Ungenauigkeiten sowie Ungenauigkeiten bei der Führung durch das Spiel aufgenommen werden. Insbesondere wird das Risiko eines Verkantens durch Schräglage eliminiert oder zumindest wesentlich verringert. Der radiale Abstand eliminiert somit das Risiko eines ungewollten Reibschlusses in den nicht wirksamen Winkelstellungen und dadurch auch ein allfälliges Verklemmen oder Verkanten der Kupplungsteile. Diese Erhöhung der Gangbarkeit der Kupplung bewirkt für das Bedienpersonal eine Verringerung der Aufenthaltsdauer in Bereichen mit widrigen Verhältnissen oder in Gefahrenbereichen, wie beispielsweise im Falle von Stichlochbohrmaschinen. Ebenfalls resultiert eine Vereinfachung der Arbeitsschritte beim Einlegen von neuem Bohrwerkzeug und verringert somit Produktionsausfall und/oder gesamte Dauer des Bohrvorgangs. Durch die erfindungsgemäße Bajonett-Kupplung ist, unter Beibehaltung einer guten Führung beim Ein- bzw. Ausführen, eine verbesserte und vereinfachte Bedienbarkeit erreicht welche insbesondere zur Betätigung geringere Kräfte erfordert.

Es ist anzumerken, dass es für die erfindungsgemäße Vorrichtung unerheblich ist ob die relativen Winkelpositionen durch Verdrehen des Kupplungskopfs gegenüber der Kupplungsmuffe oder umgekehrt erreicht werden.

Erfindungsgemäß sind Kupplungskopf und Kupplungskammer derart ausgestaltet, dass beim Verdrehen der beiden Teile von der ersten in die zweite Winkelstellung, das radiale Spiel des Kupplungskopfs in der Kupplungskammer im Bereich des Kupplungsnockens von einem Maximalwert zu Null hin abnimmt, so dass beim Verdrehen eine radiale Selbstzentrierung des Kupplungskopfes in der Kupplungskammer stattfindet. Die Abstandsverringerung zwischen Kupplungsnocken und Kupplungskammer erfolgt hierbei vorzugsweise kontinuierlich. Die radiale Zentrierung, d.h. eine Anordnung, bei der das Bohrwerkzeug koaxial zur Drehachse der Bohrmaschine ausgerichtet ist, ist für einwandfreies Bohren wesentlich. Durch diese oben beschriebene Gestaltung wird die Zentrierung automatisch durch das Kuppeln bei Erreichen der Anschlagstellung erzielt, wodurch sich zusätzliche Maßnahmen erübrigen.

Erfindungsgemäß besitzen Kupplungsnocken und Kupplungskammer konjugierte, zylindrische Drehmomentübertragungsflächen, welche in der zweiten Winkelstellung formschlüssig aufeinanderliegen. Die zylindrischen Drehmomentübertragungsflächen sind bevorzugt bezüglich der Mittelachse des Kupplungskopfs bzw. der Kupplungskammer konkav gekrümmt. Hierbei weisen die Drehmomentübertragungsflächen an Kupplungsmuffe und am Kupplungskopf im wesentlichen übereinstimmende Radien auf. Solche Drehmomentübertragungsflächen bilden durch ihre Form als Teiloberfläche eines Zylindermantels, vorzugsweise Kreiszylindermantels, gekrümmte Anpressflächen die beim Einkuppeln der Vorrichtung zwischen zusammenwirkenden Drehmomentübertagungsflächen eine große Kontakt- bzw. Auflageoberfläche ausbilden. Somit wird der Flächendruck auf den Kupplungsnocken optimal verteilt. Weiterhin verringert die gekrümmte zylindrische Oberfläche zusätzlich das Verkanten und Einfressen vom Kupplungsnocken in der zweiten, wirksamen Winkelstellung. Beim Kuppeln wird somit ein optimaler Kontakt hergestellt zur Drehmomentübertragung und beim Entkuppeln erfolgt ein sofortiges Lösen von den drehmomentübertragenden Kontaktflächen und deren Reibschluss. Weiterhin reduziert die zylindrisch gekrümmte Form die Anforderungen an Fertigungstoleranzen für die Flucht der Drehmomentübertragungsflächen.

Die Krümmung der Drehmomentübertragungsflächen bewirkt weiterhin eine gleichmäßigere Verteilung der Angriffskräfte auf die Oberfläche des Kupplungsnockens. Insbesondere werden die Scherkräfte auf den Nocken verringert. Durch die Formschlussverbindung wird weiterhin das Betätigen von Kraftschlussverbindungen, wie beispielsweise Schraubklemmen, oder aber die Verwendung anderer Verschlussteile überflüssig. Ein weiterer hieraus resultierender Vorteil ist die Vereinfachung einer Automatisierung des Kupplungsvorgangs, wobei beispielsweise automatisierte Handhabungssysteme zum Austauschen des Bohrwerkzeugs eingesetzt werden können.

In einer vorteilhaften Ausgestaltung definiert eine Krümmungsachse der Drehmomentübertragungsflächen mit der Mittelachse des Kupplungskopfs eine Ebene, wobei diese Ebene in Drehrichtung bezüglich der Ebene, welche Scheitel des Kupplungsnockens und Mittelachse des Kupplungskopfs definieren, verdreht ist. Diese Krümmungsachse definiert die Ausrichtung der Drehmomentübertragungsfläche bezüglich dem restlichen Teil des Kupplungskopfes. Bei einer solchen Ausrichtung der Drehmomentübertragungsfläche wird bei Drehmomentübertragung eine besonders vorteilhafte Verteilung der mechanischen Beanspruchung auf den Kupplungskopf erzielt, welche Belastung und Materialermüdung reduziert.

Der Kupplungsnocken kann zusätzlich asymmetrisch und derart ausgebildet sein, dass die zylindrische Drehmomentübertragungsfläche des Kupplungsnockens sich einseitig im wesentlichen vom Fuß bis zum Scheitel des Kupplungsnockens erstreckt. Durch eine derartige Ausgestaltung wird bei Anwendungen mit nur einer Drehrichtung eine zusätzliche Erhöhung der Auflagefläche, d.h. des Flächenmasses der Drehmomentübertragungsfläche erzielt, wodurch wie bereits erwähnt sich der Flächendruck reduziert. Hierbei kann auf der Seite des Kupplungsnockens, welche der Drehmomentübertragungsfläche abgewandt ist, eine abgeschrägte Auflagefläche für eine Rastvorrichtung mit einem federbelasteten Rastelement ausgebildet sein. In wirksamer Stellung wirkt ein solches Rastelement mit dieser Auflagefläche zusammen, um ein unbeabsichtigtes Lösen bzw. Rückschlagen aus der zweiten Winkelstellung zu verhindern. Dies ist insbesondere beim Schlagbohren vorteilhaft. Eine solche federbelastete Rastvorrichtung wird vorzugsweise so gestaltet, dass diese ohne zusätzliche Bedienungsmaßnahmen beim Drehen in gewünschte Winkelstellung ein- bzw. ausgerastet werden kann. Vorteilhafterweise ist die Rückhaltevorrichtung innerhalb der Kupplungsmuffe angeordnet, so dass äußerlich keine hervorstehenden Teile vorhanden sind, welche beim Bohren eine Gefahr darstellen können.

In einer bevorzugten Ausgestaltung wird die Kupplungskammer aus einem Material hergestellt, welches eine höhere Härte aufweist als das Material aus welchem der Kupplungsnocken hergestellt ist. Durch diese Wahl der Materialien wird eine Anpassung bzw. ein Anformen der Außenkontur des Kupplungsnockens an die Drehmomentübertragungsfläche innerhalb der Kupplungskammer ermöglicht. Diese kann selbsttätig bei Betrieb stattfinden, wodurch die Anforderungen an die Fertigungstoleranzen weiter verringert werden können.

In einer weiteren Ausgestaltung wird dem Kupplungskopf ein Spritzschutz zugeordnet, welcher die Zugangsöffnung im Querschnitt überdeckt und diese vor anfallender Verschmutzung schützt. Hiermit wird gleichzeitig eine Verschmutzung der Kupplungskammer verhindert. Bei Stichlochbohrmaschinen kann eine solche Verschmutzung z. B. von flüssigen Roheisenspritzern herrühren.

In einer weiteren Ausgestaltung sind Kupplungskopf und Kupplungsmuffe als Hohlbauteile mit einem Spülkanal ausgestaltet, wobei der Kupplungskopf bzw. die Kupplungsmuffe ein Spülrohr aufweist, welches in das jeweils andere Bauteil eingreift. Vorzugsweise wird das Spülrohr an der Kupplungsmuffe angeordnet, so dass es in den Kupplungskopf eingreifen kann. Diese Anordnung ermöglicht in einfacher Weise einen Kühl- bzw. Spülmittelfluss zum Bohrwerkzeug.

In einer vorteilhaften Ausführung der erfindungsgemäßen Bajonett-Kupplung ist die Kupplungsmuffe als Monoblock-Bauteil hergestellt. Dadurch wird die Gefahr unter Belastung reißender Schweißnähte eliminiert. Derartige Risse können durch die Schläge und das Gewicht des Bohrwerkzeugs beim Schlagbohren, sowie durch Temperaturbeanspruchung, beispielsweise beim Stichlochbohren entstehen. Die Zuverlässigkeit der Kupplung wird somit weiter erhöht.

Zur Verbindung des Kupplungskopfes mit einem Bohrgestänge bestehen verschiedene Möglichkeiten. Der Kupplungskopf kann in einer Ausführung Teil eines Kuppelstücks mit Adapterfunktion sein wobei der Kupplungskopf an einem Ende des Kuppelstücks angeordnet ist. In günstiger Weise wird das Kuppelstück oder Kupplungsstück als Gussteil hergestellt. Dieses Kuppelstück dient als Adapter zwischen gängigen, handelsüblichen Bohrgestängen und der erfindungsgemäßen Kupplung. Die handelsüblichen Bohrgestänge können durch diesen Adapter für die Verwendung der erfindungsgemäßen vorteilhaften Kupplung umgerüstet werden. Somit können die gängigen Bohrwerkzeuge in einfacher Weise am Einsatzort von der Bohrmaschine gelöst oder an dieser angebracht werden wobei das Verbinden von Bohrwerkzeug und Kuppelstück andernorts, an einem sichereren oder benutzerfreundlicheren Ort, erfolgen kann.

In einer möglichen Ausführung ist der Kupplungskopf als separates Teil an einem Endbereich eines Bohrgestänges befestigt. Dies kann z. B. in der Form eines übergeworfenen und angeschweißten Kupplungsstücks oder auch als angeflanschtes Kupplungsstück ausgeführt werden. Vorzugsweise weist das Kuppelstück an seinem anderen Ende eine Aufnahme zur lösbaren Verbindung mit einem Bohrgestänge auf. Eine solche Aufnahme kann beispielsweise ein Innengewinde sein, welches den handelsüblichen, oben erwähnten Bohrgestängen zur Schraubverbindung angepasst ist. Dadurch kann preiswertes Bohrwerkzeug verwendet werden und das Kuppelstück ist in einfacher Weise mehrfach verwendbar. Der Kupplungskopf kann aber auch einteilig an einen Endbereich eines Bohrgestänges angeformt sein.

Der Kupplungskopf hat zwei vorzugsweise diametral gegenüberliegende Kupplungsnocken mit je einer Drehmomentübertragungsfläche. Diese stehen in wirksamer Winkelstellung mit jeweils einer konjugierten Drehmomentübertragungsfläche der Kupplungskammer in formschlüssiger Verbindung. Diese Konfiguration ist fertigungstechnisch einfach herstellbar. Weiterhin wird dadurch ein großer Verdrehwinkel (über 60°) zwischen beiden Winkelstellungen ermöglicht, wodurch eine gute Halterung beim Schlagbohren gewährleistet ist.

Die oben erläuterte Bajonett-Kupplung lässt sich insbesondere zum Verbinden eines Bohrwerkzeugs, beispielsweise Bohrgestänges mit einer Stichlochbohrmaschine verwenden.

### Beschreibung anhand der Figuren

Im folgenden wird eine Ausgestaltung der Erfindung anhand der beiliegenden Figuren beschrieben. Es zeigen:
- Fig.1:: einen Querschnitt im Bereich der Kupplungskammer einer ersten Ausgestaltung einer Bajonett-Kupplung;
- Fig.2:: einen Querschnitt im Bereich der Kupplungskammer einer zweiten Ausgestaltung einer Bajonett-Kupplung;
- Fig.3:: Längs- und Querschnitte zu den verschiedenen Etappen beim Kuppeln einer Bajonett-Kupplung;
- Fig.4:: einen Längsschnitt der Bajonett-Kupplung gemäss Fig.3 mit einem vergrößerten Teilausschnitt im Bereich eines Spülrohrs;
- Fig.5:: Längs- und Querschnitte zu verschieden Ausführungsvarianten eines Kupplungsstücks zur Bajonett-Kupplung;

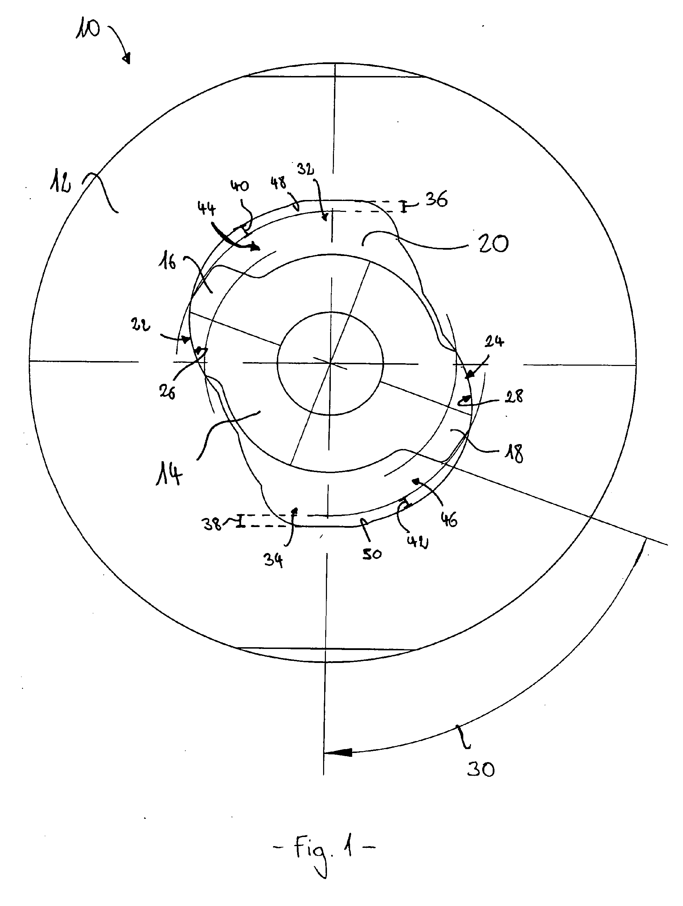

In Fig.1 ist mit Referenzzeichen 10 eine Bajonett-Kupplung im Querschnitt abgebildet. Eine Kupplungsmuffe 12 steht in Eingriff mit einem Kupplungskopf 14. Der Kupplungskopf 14 ist vorzugsweise achssymmetrisch ausgebildet und umfasst zwei diametral gegenüberliegende Kupplungsnocken 16, 18, welche an sich unsymmetrisch ausgebildet sind. Der Kupplungskopf 14 ist in axialer Richtung in eine Kupplungskammer 20 innerhalb der Kupplungsmuffe 12 eingeführt und anschließend gegenüber der Kupplungsmuffe von einer ersten Winkelstellung bezüglich der Kupplungsmuffe in die dargestellte zweite Winkelstellung verdreht. Die abgebildete zweite Winkelstellung von Kupplungskopf 14 relativ zur Kupplungsmuffe 12 ist die wirksame Stellung in welcher das Drehmoment von der Kupplungsmuffe 12 auf den Kupplungskopf 14 übertragbar ist. Hierzu stehen erste Drehmomentübertragungsflächen 22, 24 des Kupplungskopfes 14 mit entsprechenden, konjugiert geformten zweiten Drehmomentübertragungsflächen 26, 28 der Kupplungskammer 20 in formschlüssiger Verbindung.

In der ersten, unwirksamen Winkelstellung (nicht abgebildet), welche durch ein Rückdrehen des Kupplungskopfes 14 in Bohrdrehrichtung entlang Pfeil 30 erreicht wird, befinden sich die Kupplungsnocken 16, 18 jeweils in den Teilbereichen 32, 34 der Kupplungskammer 20. In dieser Stellung erfolgt kein Eingriff der ersten Drehmomentübertragungsflächen 22, 24 mit den zweiten Drehmomentübertragungsflächen 26, 28 des Kupplungskammer und der Kupplungskopf 14 kann aus der Kupplungskammer axial ausgefahren werden.

Wie aus Fig.1 ersichtlich ist die Kupplungskammer 20 derart geformt, dass in der ersten Winkelstellung entsprechende erste radiale Abstände 36, 38 zwischen Kupplungsnocken 16, 18 und Wand der Kupplungskammer 20 wesentlich größer sind als in der zweiten, wirksamen Winkelstellung. Beim Entkuppeln der Kupplung steigt demnach das radiale Spiel zwischen Kupplungsnocken 16, 18 und Kupplungskammer 20 von Null in der wirksamen Winkelstellung an bis auf einen Maximalwert 36, 38 in der ersten unwirksamen Winkelstellung. Insbesondere wird beim Entkuppeln durch Drehung entlang Pfeil 30 unverzüglich ein ansteigender Abstand zwischen den in Kontakt stehenden Flächen 22, 24 bzw. 26, 28 erzeugt. Hierdurch kann die weitere Verdrehung der beiden Teile zueinander ohne großen Kraftaufwand erfolgen. Entsprechendes gilt umgekehrt beim Kuppeln von der unwirksamen in die wirksame Winkelstellung.

Diese unverzügliche Trennung der zusammenwirkenden ersten und zweiten Drehmomentübertragungsflächen von Kupplungsnocken bzw. Kupplungskammer bei Entriegelung wird erreicht durch die gekrümmte Formgebung der Drehmomentübertragungsflächen 22, 24 bzw. 26, 28, welche im wesentlichen Zylinderteilflächen entsprechen, und durch die abgebildete Formgebung der Kupplungskammer 20. Man wird beachten, dass ohne zusätzlichen Aufwand durch die gekrümmte Formgebung der ersten Drehmomentübertragungsflächen 22, 24 bzw. 26, 28 beim Kuppeln ein Selbstzentrieren von Kupplungskopf 14 bezüglich Kupplungsmuffe 12 erreicht wird.

Wie aus Fig.1 weiter ersichtlich sind zweite radiale Abstände 40, 42 in Zwischenbereichen 44, 46 der Kupplungskammer 20 zwischen wirksamer und unwirksamer Stellung kleiner als in den Bereichen 32, 34. Diese Verkleinerung des radialen Spiels kann stetig oder ,wie abgebildet, mittels vorzugsweise abgerundeten Stufen 48, 50 erfolgen. Beim Kuppeln in die wirksame Winkelstellung nimmt das radiale Spiel durch die gekrümmte Form der Drehmomentübertragungsflächen 22, 24 bzw. 26, 28 gegen Null ab. Man wird beachten, dass durch die erhöhten radialen Abstände 36, 38 bzw. 40, 42 einem Verkanten durch Schrägstellung der Mittelachsen von Kupplungskopf 14 und Kupplungsmuffe 12 beim Kuppeln oder Entkuppeln entgegengewirkt ist.

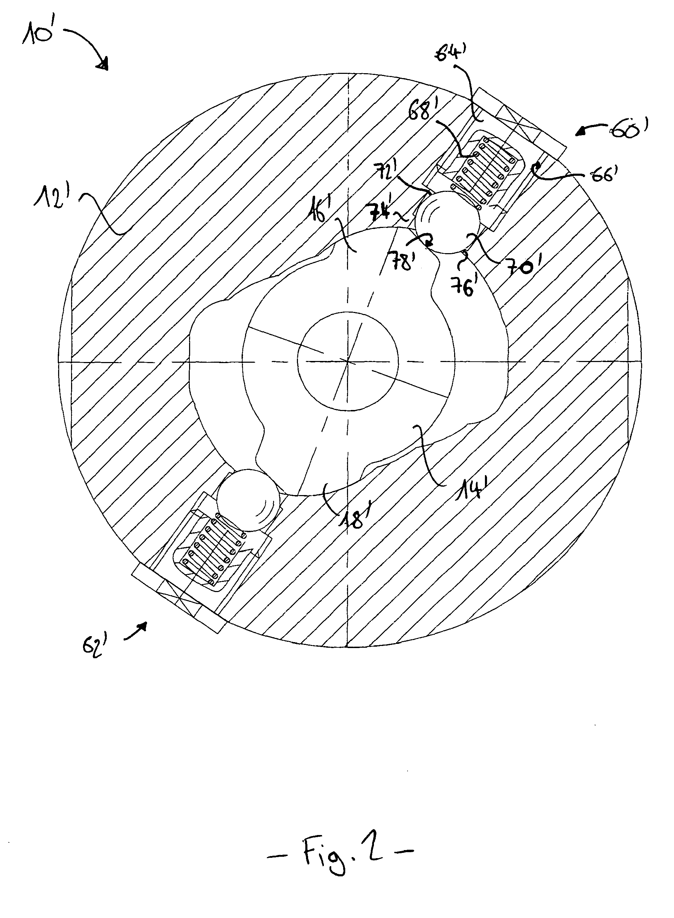

Fig.2 zeigt einen Querschnitt einer weiteren Ausführung der Bajonettkupplung 10'. Die Formgebung von Kupplungsmuffe 12' und Kupplungskopf 14' ist analog zur obigen Beschreibung gemäss Fig.1. In der Ausführung nach Fig.2 sind die Kupplungsnocken 16', 18' jedoch geeignet ausgestaltet, um mit zusätzlichen Rastvorrichtungen 60', 62' zusammenzuwirken. Zur Vereinfachung wird im folgenden eine der beiden vorzugsweise identischen Rastvorrichtungen beschrieben. Die Rastvorrichtung 60' umfasst eine schraubbare Halterung 64' welche in eine radiale Gewindebohrung 66' in der Kupplungsmuffe 12' eingelassen ist. Die Halterung 64' dient als Auflager für eine Feder 68' welche eine Vorspannung auf eine als Rastelement 70' dienende Kugel ausübt. In Verlängerung der Gewindebohrung 66' befindet sich eine zylindrische Aussparung 72' mit stufenförmigen Absätzen 74' und 76' als Aufnahme für die Kugel 70'. Durch de Feder 68' wird die Kugel 70' auf eine am Kupplungsnocken 16' angebrachte Rastfläche 78' angepresst. Diese Rastfläche 78' ist derart ausgerichtet, dass durch die Rastvorrichtung 60' einem unbeabsichtigten Lösen oder Zurückschlagen aus der wirksamen, gekuppelten Winkelstellung entgegengewirkt ist. Die Rastvorrichtung 60', insbesondere die Federkonstante der Feder 68', wird vorzugsweise so gestaltet, dass durch eine geringe zusätzliche Kraft, welche von einer Bedienperson aufgebracht werden kann, die Rastvorrichtung 60' beim Kuppeln oder Entkuppeln einfach lösbar, bzw. überwindbar ist. Man wird beachten, dass die Kugel 70' als Rastelement sich hierbei besonders zu diesem Zwecke eignet. In Fig.2 ist für jeden Kupplungsnocken 16', 18' eine Rastvorrichtung abgebildet, welche sich jedoch ohne weiteres durch eine einzige, entsprechend dimensionierte Rastvorrichtung für nur einen der beiden Nocken ersetzen lassen.

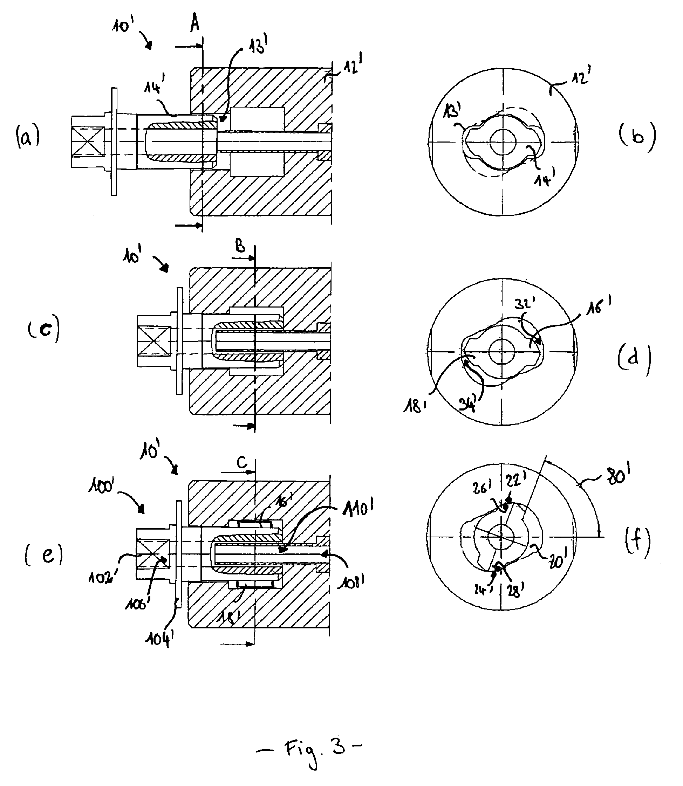

In Fig.3 sind die wesentlichen Etappen zum Einführen und Kuppeln einer Bajonett-Kupplung 10' z.B. gemäss Fig.1 dargestellt. In Fig.3 (a) ist die Position beim Einführen des Kupplungskopfes 14' in eine Zugangsöffnung 13' der Kupplungsmuffe 12' im Längsschnitt dargestellt. Teil (b) zeigt den Querschnitt gemäss Ebene A aus Teil (a).

In Fig.3 (c) ist die vollständig eingeführte Stellung des Kupplungskopfes 14' in die Kupplungskammer 20' dargestellt. In dieser Winkelstellung sind die Kupplungsnocken 16', 18' so ausgerichtet, dass sie in die Bereiche 32', 34' eingreifen, wie im Querschnitt (d) gemäss Ebene B ersichtlich. Man wird beachten, dass das hierin vorhandene radiale Spiel ein einfaches Ein- bzw. Ausführen ermöglicht, da ein Verkanten vermieden ist.

Fig.3 (e) zeigt den Längsschnitt welcher der gekuppelten, d.h. drehmomen t-übertragenden, Winkelstellung von Kupplungsmuffe 12' und Kupplungskopf 14' entspricht. Im Querschnitt Fig.3 (f) gemäss Ebene C ist ersichtlich, dass hierbei die zylinderförmigen Drehmomentübertragungsflächen 22', 24' bzw. 26', 28' von Kupplungsnocken 16', 18' bzw. Kupplungskammer 20' in formschlüssiger Verbindung stehen. Die Winkelstellung in (f) wird lediglich durch Verdrehen um einen Winkel 80', welcher vorzugsweise einen Betrag über 60° aufweist, gegenüber (d) erreicht. Man wird beachten, dass zum Verriegeln in die wirksame Stellung im Regelfall keine Werkzeuge notwendig sind. Auch die Betätigung weiterer Vorrichtungen ist zum Verriegeln nicht erforderlich. Es ist anzumerken, dass die oben stehenden Erläuterungen entsprechend angepasst beim Lösen und Ausführen der Bajonett-Kupplung gelten.

In Fig. 3 sind weitere Aspekte zur Ausführung der Erfindung ersichtlicht. Zunächst bildet der Kupplungskopf 14' vorzugsweise einen Bestandteil eines Kupplungsstücks 100'. Dieses Kupplungsstück 100' ermöglicht mittels einer Aufnahmevorrichtung 102' das Verbinden mit einem Bohrwerkzeug, beispielsweise einem Bohrgestänge (nicht abgebildet) und fungiert somit als Adapterstück zwischen Bohrwerkzeug und Bajonett-Kupplung. Um das Verschmutzen von Zugangsöffnung 13' und Kupplungskammer 20' zu verhindern, ist am Kupplungsstück 100' ein vorzugsweise ringförmiger Spritzschutz 104', beispielsweise als angeschweißte Ringscheibe, angebracht, welcher die Zugangsöffnung 13' überdeckt.

In der dargestellten Ausführung sind Kupplungsstück 100' und Kupplungsmuffe 12' mit Spülkanälen 106', 108' für Kühl- bzw. Spülmittelfluss ausgestattet. Die Kühlkanäle werden über ein Spülrohr 110' verbunden, welches an der Kupplungsmuffe 12' angeordnet ist und beim Einführen des Kupplungskopfs in die Kupplungskammer in den Spülkanal 106' des Kupplungsstücks 100' eingreift. Um ein Ankanten beim Einführen zu vermeiden, ist das Spülrohr 110' dabei vorzugsweise in dem, dem Kupplungsstück 100' zugewandten, Endbereich abgeschrägt.

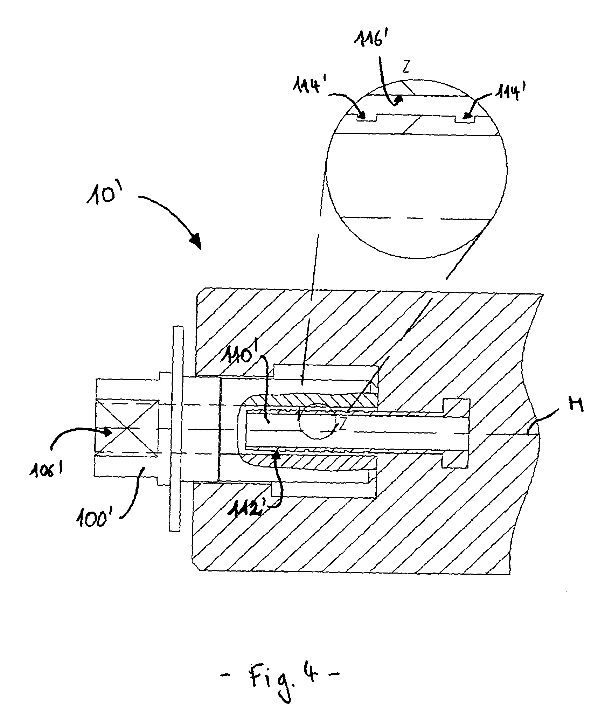

Fig.4 zeigt einen Längsschnitt der Bajonett-Kupplung 10' gemäss Fig.3 mit einem, zur besseren Veranschaulichung, vergrößerten Teilausschnitt Z im Bereich des Spülrohrs 110'.

Um ein einfaches Einführen des Spülrohrs in den Spülkanal 106' zu ermöglichen, ist es konstruktionstechnisch notwendig, einen gewissen Abstand zwischen der Außenwand 112' des Spülrohrs 110' und der Innenwand 116' des Spülkanals 106' des Kupplungsstücks 100' zu gewährleisten. Dieser Abstand bedingt jedoch einen Druckverlust im Kühlmittelfluss. Um dem entgegenzuwirken kann beispielsweise eine geeignete materielle Dichtung vorgesehen werden. Eine solche Dichtung erweist sich jedoch bei Schlagbohranwendungen, die ein pendelnd schlagendes Verschieben von Kupplungsstück 100' zu Kupplungsmuffe 14' verursachen, als äußerst unpraktisch und störungsanfällig.

Bei der dargestellten Ausgestaltung wird dieses Problem durch das Anbringen von Nuten 114' auf dem Spülrohr 110' gelöst. Die Außenwand 112' des Spülrohrs 110' ist hierzu wie in dem vergrößert dargestellten Bereich Z ersichtlich mit vorzugsweise scharfkantigen Nuten 114' versehen, welche sich umfänglich und transversal zur Mittelachse M über diese erstrecken. Eine Vielzahl dieser Nuten 114' sind in gleichmäßigem Abstand über den Bereich des Spülrohrs 110' verteilt, welcher in das Kupplungsstück 100' eingreift. Unter Druck wird das durch den Spalt zwischen Außenwand des Spülrohrs 112' und Innenwand 116' des Kupplungsstücks 100' fließende Kühl- bzw. Spülmittel an den Kanten der Nuten 114' verwirbelt. Die resultierenden Verwirbelungen im Verlustfluss bilden jeweils einen Flusswiderstand, welcher einen künstlichen Druckabfall bewirkt.

Durch mehrere solcher Nuten 114' kann dieser Effekt derart verstärkt werden, dass der Verlustfluss an Kühl- bzw. Spülmittel durch den konstruktionsbedingten Spalt wesentlich reduziert wird.

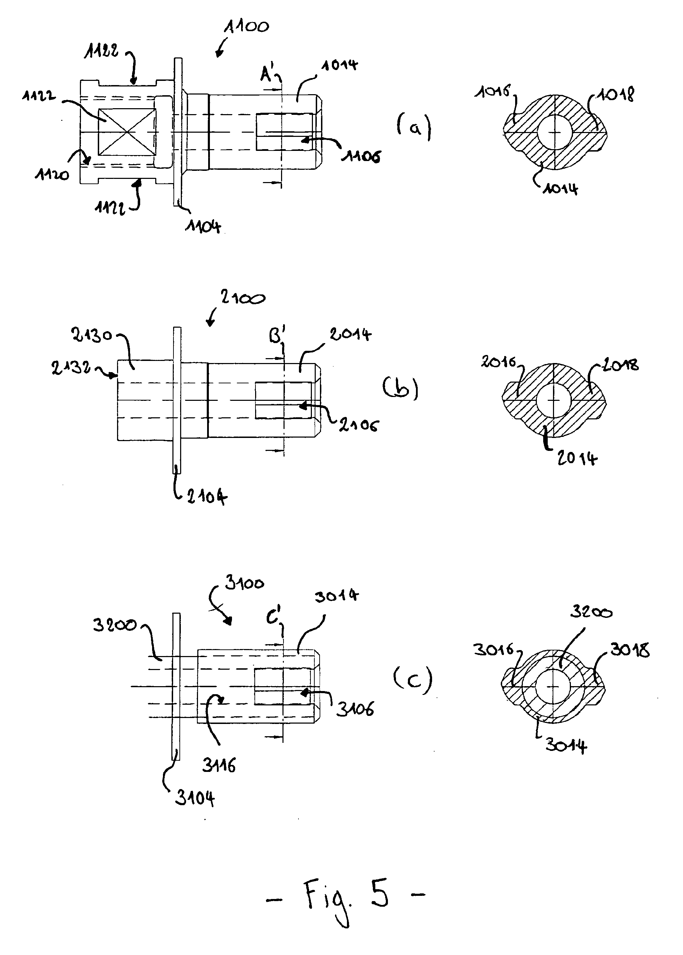

Fig. 5 zeigt verschiedene Ausführungen des Kupplungsstücks wie oben im Zusammenhang mit der Fig. 3 beschrieben. Die Querschnitte rechts in Figur 5 entsprechen jeweils den durch A', B', bzw. C' angedeuteten Ebenen im Längsschnitt links. In Längs- und Querschnitt (a) ist eine Variante des Kupplungsstücks 1100 gezeigt, welche einen Spritzschutz 1104 aus einer angeschweißten oder angegossenen Scheibe umfasst. Der dem Kupplungskopf 1014 abgewandte Endbereich des Kupplungsstücks 1100 ist mit einem Innengewinde 1120 versehen. Das Innengewinde 1120 dient zur Verbindung mit einem handelsüblichen Bohrgestänge (nicht abgebildet) zum Schraubverbinden. Das Innengewinde 1120 wirkt zugleich als abdichtende Verbindung des Spülkanals 1106 mit dem Spülkanal des Bohrgestänges. Somit kann die erfindungsgemäße Bajonett-Kupplung ohne weiteres mit gängigen Schraubbohrgestängen verwendet werden. Dieser Endbereich ist an der Außenseite weiterhin mit Abflachungen 1122 für Maulschlüssel versehen, welcher beispielsweise beim Verschrauben verwendet wird. Diese Variante kann aufgrund der Verschraubung mittels Innengewinde 1120 mehrmals an verschiedenen Bohrgestängen verwendet werden.

Fig. 5 (b) zeigt eine weitere Variante eines Kupplungsstücks 2100 bei welchem alternativ zu (a) ein Bohrgestänge an einen Flansch 2130 angeschweißt werden kann. Hierzu werden Stirnseite 2132 vom Flansch 2130 und Stirnseite eines Bohrgestänges (nicht abgebildet) bündig und koaxial zusammengeführt und verschweißt. Auch hierdurch wird die Abdichtung des Spülkanals 2106 gewährleistet. Durch Abtrennen der Schweißverbindung, und eventuelles Abdrehen des Flansches 2130 kann auch dieses Kupplungsstück 2130 mehrmals verwendet werden. Hierbei wird diese Bearbeitung vorzugsweise an einem anderen Ort stattfinden, als der Einsatzort der Bajonett-Kupplung. Weiter Eigenschaften des Kupplungsstücks 2130 entsprechen, angedeutet durch angepasste Referenzeichen, den oben zu Fig.5 (a) erwähnten.

In Fig.5 (c) ist mit Referenzeichen 3100 eine weitere im Vergleich zu oben kürzere Variante eines Kupplungsstücks gekennzeichnet. Bei dieser Variante wird der Kupplungskopf 3014, beispielsweise aus einem Rohrstück gepresst, auf ein Bohrgestänge 3200 aufgeschoben, so dass dieser das Bohrgestänge 3200 an einem Endbereich umschließt, und wird dort an das Bohrgestänge 3200 angeschweißt. Innenwand 3116 des Kupplungsstücks 3100 wird somit durch die Innenwand des Bohrgestänges 3200 gebildet. Bei dieser Variante ist ein Spritschutz 3104, aus einer Scheibe, beispielsweise handelsüblich oder aus Blech gebrannt, an das Bohrgestänge 3200 in angemessenem Abstand angebracht, vorzugsweise angeschweißt. Diese Variante dient der einmaligen Verwendung und enthält im wesentlichen nur die Kupplungsnocken 3016 und 3018.

Alle gezeigten Varianten des Kupplungsstücks dienen zur Verwendung der Bajonett-Kupplung als Adapter für gängiges Bohrgestänge. Wie oben erläutert sind Variante (a) und (b) mehrmals verwendbar z. B. mit erneuertem Bohrgestänge und Variante (c) ist eine Einwegausführung. Sie lassen sich als Gussteil herstellen ohne zusätzliche mechanische Bearbeitung. Hierbei wird vorzugsweise für das Kupplungsstück oder zumindest den Kupplungskopf ein weicheres Material gewählt als für die Kupplungsmuffen.

Zurückkommend auf Fig. 1 bis 3 bleibt zu erwähnen, dass die Kupplungsmuffe 12, 12' trotz komplexer Geometrie in verhältnismäßig einfacher Weise herstellbar ist wie im folgenden erläutert. Die Kupplungsmuffe 12, 12' wird vorzugsweise als Monoblock Teil einstückig hergestellt, wodurch die Rissgefahr, beispielsweise an Schweißnähten, eliminiert ist. Die Außenform kann in bekannter Weise durch Giessen oder gegebenenfalls durch Drehen erzielt werden. Anschließend werden eine zentrale Bohrung sowie jeweils verschiedene Bohrungen für die Eckpunkte der Zugangsöffnung ausgeführt. Die größere zentrale Bohrung gibt zusammen mit den Bohrungen an den Eckpunkten die Vorform für Zugangsöffnung 13' und Kupplungskammer 20, 20'. Diese Vorform wird anschließend beispielsweise mittels eines Stirnfräsers vervollständigt.

Darauf erfolgt dann ein Hinterfräsen der Zugangsöffnung mittels eines Rundfräsers so, dass die zylindrischen ersten und zweiten Drehmomentübertragungsflächen 26, 26' und 28, 28' sowie die restliche Bewandung der Kupplungskammer entstehen. Hierbei sollte insbesondere die Parallelität der Drehmomentübertragungsflächen zur Mittelachse beachtet werden. Die Hinterfräsung für die Kupplungskammer erfolgt nach einer vordefinierten Kurvenbahn, welche sich aus mehreren Radien mit verschiedenen Mittelpunkten zusammensetzt. Es bleibt zu erwähnen, dass zur Vereinfachung der Hinterfräsung ein spezielles Werkzeug mit einer großen Wirkungstiefe, einem geringen Durchmesser des Schafts und einem großem Arbeitsradius besonders geeignet ist. Durch ein derartiges Werkzeug kann ein größtmöglicher Überlapp von der, beim Schlagen als Rückhalterung dienenden, Umrandung der Zugangsöffnung 13' über die Kupplungskammer 20, 20' erreicht werden.

Abschließend bleibt zu erwähnen, dass obwohl die abgebildeten Ausführungen, nur für eine Drehrichtung ausgelegt sind, sich eine erfindungsgemäße Kupplung entsprechend auch für Systeme mit beiden Drehrichtungen ausgestalten lässt.

### Referenzzeichenliste

**Fig.1-3**
- 10, 10': Bajonett-Kupplung
- 12, 12': Kupplungsmuffe
- 13': Zugangsöffnung
- 14, 14': Kupplungskopf
- 16, 18, 16', 18': Kupplungsnocken
- 20, 20': Kupplungskammer
- 22, 24, 22', 24': erste Drehmomentübertragungsflächen
- 26, 28, 26', 28': zweite Drehmomentübertragungsflächen
- 30: Bohrdrehrichtung
- 32, 34, 32', 34': Teilbereiche der Kupplungskammer
- 36, 38: erste radiale Abstände
- 40, 42: zweite radiale Abstände
- 44, 46: Zwischenbereiche der Kupplungskammer
- 48, 50: Stufen

**Fig.2**
- 60', 62': Rastvorrichtungen
- 64': Halterung
- 66': Gewindebohrung
- 68': Feder
- 70': Rastelement
- 72': Aussparung
- 74', 76': Absätze
- 78': Rastfläche
- 80': Verdrehwinkel

**Fig.3**
- 100': Kupplungsstück
- 102': Aufnahmevorrichtung
- 104': Spritzschutz
- 106', 108': Spülkanäle

**Fig.4**
- 110': Spülrohr
- 112': Außenwand des Spülrohrs
- 114': Nuten
- 116': Innenwand des Kupplungsstücks

**Fig.5**
- 1100, 2100, 3100: Kupplungsstück
- 1104, 2104, 3104: Spritzschutz
- 1106,2106,3106: Spülkanal
- 1014, 2014, 3014: Kupplungskopf
- 1016,2016,3016: Kupplungsnocken
- 1018,2018,3018: Kupplungsnocken
- 1120: Innengewinde
- 1122: Abflachungen für Maulschlüssel
- 2130: Flansch
- 2132: Stirnseite vom Flansch
- 3200: Bohrgestänge

## Patentansprüche

1. Bajonett-Kupplung (10; 10') zur Drehmomentübertragung einer Dreh-Schlagbohrmaschine, insbesondere einer Stichlochbohrmaschine, auf ein Bohrwerkzeug, umfassend:
eine Kupplungsmuffe (12; 12') mit Kupplungskammer (20; 20') und einer Zugangsöffnung (13') die axial in die Kupplungskammer einmündet,
einen Kupplungskopf (14; 14') mit zwei Kupplungsnocken (16, 18; 16', 18'), wobei der Kupplungskopf in einer ersten Winkelstellung durch die Zugangsöffnung axial in die Kupplungskammer einführbar ist, und wobei der Kupplungskopf in einer zweiten Winkelstellung mittels je einer Drehmomentübertragungsfläche (22, 24; 22', 24') beider Kupplungsnocken zur Drehmomentübertragung an jeweils einer konjugierten Drehmomentübertragungsfläche (26, 28; 26', 28') der Kupplungskammer anliegt,
wobei Kupplungsnocken und Kupplungskammer jeweils konjugiert gekrümmte, zylindrische, vorzugsweise kreiszylindrische, Drehmomentübertragungsflächen (22, 24; 22', 24'; 26, 28; 26', 28') aufweisen, welche in der zweiten Winkelstellung formschlüssig zur Drehmomentübertragung zusammenwirken
**dadurch gekennzeichnet, dass**
Kupplungskopf (14; 14') und Kupplungskammer (20; 20') derart ausgestaltet sind, dass in der ersten Winkelstellung, das radiale Spiel (36, 38) des Kupplungskopfs in der Kupplungskammer im Bereich der Kupplungsnocken wesentlich größer ist als in der zweiten Winkelstellung und Kupplungskopf (14; 14') und Kupplungskammer (20; 20') derart ausgestaltet sind, dass beim Verdrehen der beiden Teile von der ersten in die zweite Winkelstellung, das radiale Spiel (40, 42) des Kupplungskopfs in der Kupplungskammer im Bereich der Kupplungsnocken von einem Maximalwert zu Null hin abnimmt, so dass beim Verdrehen eine radiale Seibstzentrierung des Kupplungskopfes in der Kupplungskammer stattfindet.

2. Bajonett-Kupplung nach Anspruch 1, wobei die zylindrischen Drehmomentübertragungsflächen (22, 24; 22', 24'; 26, 28; 26', 28') bezüglich einer Mittelachse (M) des Kupplungskopfs bzw. der Kupplungskammer konkav gekrümmt sind.

3. Bajonett-Kupplung nach Anspruch 1 oder 2, wobei die Drehmomentübertragungsflächen (22, 24; 22', 24') eine Krümmungsachse besitzen, welche mit der Mittelachse (M) des Kupplungskopfs eine Ebene definiert, die in Drehrichtung bezüglich der Ebene, welche Scheitel des Kupplungsnockens (16, 18; 16', 18') und Mittelachse des Kupplungskopfs definieren, verdreht ist.

4. Bajonett-Kupplung nach Anspruch 1 oder 2, wobei der Kupplungsnocken ('16, 18; 16', 18') asymmetrisch ausgebildet ist, und wobei die zylindrische Drehmomentübertragungsfläche (22, 24; 22', 24') des Kupplungsnockens sich einseitig im wesentlichen vom Fuß bis zum Scheitel des Kupplungsnockens erstreckt.

5. Bajonett-Kupplung nach Anspruch 4, wobei der Kupplungsnocken (16' 18') auf der, der Drehmomentübertragungsfläche (22', 24') abgewandten, Seite mit einer abgeschrägten Auflagefläche (78') für eine Rastvorrichtung (60; 62') mit einem federbelasteten Rastelement (70') ausgebildet ist, wobei das Rastelement in wirksamer Stellung mit der Auflagefläche zusammenwirkt, um ein unbeabsichtigtes Lösen aus der zweiten Winkelstellung zu verhindern.

6. Bajonett-Kupplung nach Anspruch 5, wobei die Rastvorrichtung (60; 62') innerhalb der Kupplungsmuffe (12') angeordnet ist.

7. Bajonett-Kupplung nach einem der vorhergehenden Ansprüche, wobei die Kupplungsmuffe (12;12') aus einem Material hergestellt ist, welches eine höhere Härte aufweist als das Material aus welchem der Kupplungsnocken (16, 18, 16', 18') hergestellt ist.

8. Bajonett-Kupplung nach einem der vorhergehenden Ansprüche, wobei dem Kupplungskopf (14; 14') ein Spritzschutz (104') zugeordnet ist, welcher die Zugangsöffnung (13') im Querschnitt überdeckt und diese vor anfallender Verschmutzung schützt.

9. Bajonett-Kupplung nach einem der vorhergehenden Ansprüche, wobei Kupplungskopf (14; 14') und Kupplungsmuffe (12; 12') als Hohlbauteile mit einem Spülkanal (106'; 108') ausgestaltet sind, wobei der Kupplungskopf bzw. die Kupplungsmuffe ein Spülrohr (110') aufweist, welches in das jeweils andere Bauteil eingreift.

10. Bajonett-Kupplung nach einem der vorhergehenden Ansprüche, wobei die Kupplungsmuffe (12; 12') als Monoblock-Bauteil hergestellt ist.

11. Bajonett-Kupplung nach einem der vorhergehenden Ansprüche, wobei der Kupplungskopf an einem Ende eines Kuppelstücks (100'; 1100; 2100; 3100) angeordnet ist.

12. Bajonett-Kupplung nach Anspruch 11, wobei das Kuppelstück (100'; 1100; 2100; 3100) an seinem anderen Ende eine Aufnahme (102') zur lösbaren Verbindung mit einem Bohrgestänge aufweist.

13. Bajonett-Kupplung nach Anspruch 1 bis 10, wobei der Kupplungskopf (3014) einteilig an einen Endbereich eines Bohrgestänges (3200) angeformt ist.

14. Bajonett-Kupplung nach Anspruch 1 bis 10, wobei der Kupplungskopf (1014; 2014) als separates Teil an einem Endbereich eines Bohrgestänges befestigt ist.

15. Verwendung der Bajonett-Kupplung nach einem der vorhergehenden Ansprüche zum Verbinden eines Bohrwerkzeugs mit einer Stichlochbohrmaschine.

## Claims

1. A bayonet coupling (10; 10') for transmitting torque from a rotary-percussion drill, in particular a taphole drill, to a drill bit, comprising:
a coupling sleeve (12; 12') with coupling chamber (20; 20') and an access opening (13'), which opens axially into the coupling chamber, a coupling head (14; 14') with two coupling cams (16, 18; 16', 18'), the coupling head being capable, in a first angular position, of axial introduction through the access opening into the coupling chamber, and, in a second angular position, the coupling head lying, by means of in each case one torque transmission surface (22, 24; 22', 24') of the two coupling cams for transmitting torque, against in each case one conjugated torque transmission surface (26, 28; 26', 28') of the coupling chamber, the coupling cams and coupling chambers in each case comprising conjugatedly curved, cylindrical, preferably circular cylindrical, torque transmission surfaces (22, 24; 22', 24'; 26, 28; 26', 28') which, in the second angular position, interact form-fittingly to transmit torque,
**characterised in that**
the coupling head (14; 14') and coupling chamber (20; 20') are constructed such that, in the first angular position, the radial play (36, 38) of the coupling head in the coupling chamber in the region of the coupling cams is substantially larger than in the second angular position and the coupling head (14; 14') and coupling chamber (20; 20') are constructed such that, on rotation of the two parts from the first into the second angular position, the radial play (40, 42) of the coupling head in the coupling chamber in the region of the coupling cams declines from a maximum value towards zero, such that, on rotation, radial self-centring of the coupling head in the coupling chamber takes place.

2. A bayonet coupling according to claim 1, wherein the cylindrical torque transmission surfaces (22, 24; 22', 24'; 26, 28; 26', 28') are concavely curved with regard to a centre axis (M) of the coupling head or coupling chamber.

3. A bayonet coupling according to claim 1 or claim 2, wherein the torque transmission surfaces (22, 24; 22', 24') have an axis of curvature which, with the centre axis (M) of the coupling head, defines a plane which is rotated in the direction of rotation with regard to the plane defined by the vertex of the coupling cam (16, 18; 16', 18') and centre axis of the coupling head.

4. A bayonet coupling according to claim 1 or claim 2, wherein the coupling cam (16, 18; 16', 18') is of asymmetric construction and wherein the cylindrical torque transmission surface (22, 24; 22', 24') of the coupling cam extends on one side substantially from the foot to the vertex of the coupling cam.

5. A bayonet coupling according to claim 4, wherein the coupling cam (16' 18') is constructed on the side remote from the torque transmission surface (22', 24') with a bevelled bearing surface (78') for a latching device (60; 62') having a spring-loaded latch element (70'), the latch element interacting in the active position with the bearing surface in order to prevent unintentional release from the second angular position.

6. A bayonet coupling according to claim 5, wherein the latching device (60; 62') is arranged within the coupling sleeve (12').

7. A bayonet coupling according to any one of the preceding claims, wherein the coupling sleeve (12; 12') is produced from a material which exhibits a higher hardness than the material from which the coupling cam (16, 18, 16', 18') is produced.

8. A bayonet coupling according to any one of the preceding claims, wherein the coupling head (14; 14') is associated with a splash guard (104') which covers the access opening (13') in cross-section and protects the latter from any soiling which may arise.

9. A bayonet coupling according to any one of the preceding claims, wherein coupling head (14; 14') and coupling sleeve (12; 12') are constructed as hollow components with a flushing duct (106'; 108'), the coupling head and coupling sleeve respectively comprising a flushing tube (110') which engages in the respective other component.

10. A bayonet coupling according to any one of the preceding claims, wherein the coupling sleeve (12; 12') is produced as a monoblock component.

11. A bayonet coupling according to any one of the preceding claims, wherein the coupling head is arranged at one end of a coupling piece (100'; 1100; 2100; 3100).

12. A bayonet coupling according to claim 11, wherein the coupling piece (100'; 1100; 2100; 3100) comprises at its other end a receptacle (102') for detachable connection with a drill pipe.

13. A bayonet coupling according to claims 1 to 10, wherein the coupling head (3014) is formed in one piece on an end region of a drill pipe (3200).

14. A bayonet coupling according to claims 1 to 10, wherein the coupling head (1014; 2014) is fastened as a separate part to an end region of a drill pipe.

15. Use of a bayonet coupling according to any one of the preceding claims for connecting a drill bit with a taphole drill.

## Revendications

1. Accouplement à baïonnette (10 ; 10') pour la transmission de couple d'une foreuse roto-percutante, en particulier d'une foreuse à trous de coulée, à un outil de forage, comprenant :
un manchon d'accouplement (12 ; 12') avec chambre d'accouplement (20 ; 20') et une ouverture d'accès (13'), qui débouche axialement dans la chambre d'accouplement,
une tête d'accouplement (14 ; 14') avec deux cames d'accouplement (16, 18 ; 16', 18'), la tête d'accouplement pouvant être introduite dans une première position angulaire à travers l'ouverture d'accès axialement dans la chambre d'accouplement, et la tête d'accouplement s'appliquant dans une seconde position angulaire au moyen de respectivement une surface de transmission de couple (22, 24 ; 22', 24') des deux cames d'accouplement pour la transmission de couple à respectivement une surface de transmission de couple (26, 28 ; 26', 28') conjuguée de la chambre d'accouplement,
les cames d'accouplement et la chambre d'accouplement présentant respectivement des surfaces de transmission de couple (22, 24 ; 22', 24' ; 26, 28 ; 26', 28') incurvées de façon conjuguée, cylindriques, de préférence cylindriques circulaires, qui coopèrent dans la seconde position angulaire par complémentarité de forme pour la transmission de couple,
**caractérisé en ce que**
la tête d'accouplement (14 ; 14') et la chambre d'accouplement (20 ; 20') sont conçues de telle sorte que, dans la première position angulaire, le jeu radial (36, 38) de la tête d'accouplement dans la chambre d'accouplement dans la zone des cames d'accouplement est sensiblement plus grand que dans la seconde position angulaire et la tête d'accouplement (14 ; 14') et la chambre d'accouplement (20 ; 20') sont conçues de telle sorte que, lors de la torsion des deux parties de la première dans la seconde position angulaire, le jeu radial (40, 42) de la tête d'accouplement dans la chambre d'accouplement dans la zone des cames d'accouplement diminue d'une valeur maximale jusqu'à zéro, de sorte que, lors de la rotation, on a un autocentrage radial de la tête d'accouplement dans la chambre d'accouplement.

2. Accouplement à baïonnette selon la revendication 1, les surfaces de transmission de couple (22, 24 ; 22', 24' ; 26, 28 ; 26', 28') cylindriques étant incurvées de façon concave par rapport à un axe médian (M) de la tête d'accouplement et de la chambre d'accouplement.

3. Accouplement à baïonnette selon la revendication 1 ou 2, les surfaces de transmission de couple (22, 24 ; 22', 24') présentant un axe de courbure qui définit avec l'axe médian (M) de la tête d'accouplement un plan qui est tourné dans le sens de rotation par rapport au plan qui est défini par le sommet de la came d'accouplement (16, 18 ; 16', 18') et l'axe médian de la tête d'accouplement.

4. Accouplement à baïonnette selon la revendication 1 ou 2, la came d'accouplement (16, 18 ; 16', 18') étant conçue asymétrique, et la surface de transmission de couple (22, 24 ; 22', 24') cylindrique de la came d'accouplement s'étendant sur un côté sensiblement depuis la base jusqu'au sommet de la came d'accouplement.

5. Accouplement à baïonnette selon la revendication 4, la came d'accouplement (16', 18') sur le côté opposé à la surface de transmission de couple (22', 24') étant conçue avec une surface d'appui (78') chanfreinée pour un dispositif d'encliquetage (60 ; 62') avec un élément d'encliquetage (70') sollicité par ressort, l'élément d'encliquetage coopérant dans la position active avec la surface d'appui, afin d'empêcher un détachement involontaire de la seconde position angulaire.

6. Accouplement à baïonnette selon la revendication 5, le dispositif d'encliquetage (60 ; 62') étant disposé à l'intérieur du manchon d'accouplement (12').

7. Accouplement à baïonnette selon l'une quelconque des revendications précédentes, le manchon d'accouplement (12 ; 12') étant fabriqué dans un matériau qui présente une dureté plus grande que le matériau dans lequel la came d'accouplement (16, 18 ; 16', 18') est fabriquée.

8. Accouplement à baïonnette selon l'une quelconque des revendications précédentes, une protection contre les projections (104'), qui recouvre l'ouverture d'accès (13') en section et la protège contre les salissures occasionnées, étant associée à la tête d'accouplement (14 ; 14').

9. Accouplement à baïonnette selon l'une quelconque des revendications précédentes, la tête d'accouplement (14 ; 14') et le manchon d'accouplement (12 ; 12') étant conçus sous forme de composants creux avec un canal de lavage (106', 108'), la tête d'accouplement ou le manchon d'accouplement présentant un tuyau de lavage (110') qui s'engage dans l'autre composant concerné.

10. Accouplement à baïonnette selon l'une quelconque des revendications précédentes, le manchon d'accouplement (12 ; 12') étant fabriqué sous forme de composant monobloc.

11. Accouplement à baïonnette selon l'une quelconque des revendications précédentes, la tête d'accouplement étant disposée sur une extrémité d'une pièce d'accouplement (100', 1100 ; 2100 ; 3100).

12. Accouplement à baïonnette selon la revendication 11, la pièce d'accouplement (100', 1100 ; 2100 ; 3100) présentant sur son autre extrémité un logement (102') pour la liaison amovible avec une tringle de forage.

13. Accouplement à baïonnette selon les revendications 1 à 10, la tête d'accouplement (3014) étant formée d'une seule pièce sur une zone d'extrémité d'une tringle de forage (3200).

14. Accouplement à baïonnette selon les revendications 1 à 10, la tête d'accouplement (1014 ; 2014) étant fixée sous forme de pièce séparée sur une zone d'extrémité d'une tringle de forage.

15. Utilisation de l'accouplement à baïonnette selon l'une quelconque des revendications précédentes pour la liaison d'un outil de forage avec une foreuse à trous de coulée.
